# EUROPEAN PATENT APPLICATION

(11) **EP 2 853 513 A1**
(43) Date of publication of application: **01.04.2015**
(21) Application number: 13199692.8
(22) Date of filing: 27.12.2013
(51) Int. Cl.: C01B 31/04

(54) **Graphene windows, methods for making same, and devices containing same**

(30) Priority: 27.09.2013 US 201314039707
(71) Applicant: Clean Energy Labs, LLC, Austin, Texas 78754 (US)
(72) Inventor: Everett, William Neil, Cedar Park, TX 78613 (US); Pinkerton, Joseph F., Austin, TX 78703 (US); Lackowski, William Martin, Austin, TX 78759 (US)
(74) Representative: HGF Limited

(57) **Abstract**

The present invention relates to graphene windows and methods for making same. The present invention further relates to devices that include such graphene windows.

## Description

### CROSS-REFERENCE TO RELATED PATENT APPLICATIONS

This application a continuation-in-part of U.S. Patent No. 14/006,045, which is the 35 U.S.C. § 371 national application of International Patent Application No. PCT/US2011/066497, filed December 21, 2011, which designated the United States and claimed priority to provisional U.S. Patent Application Serial No. 61/427,011, filed on December 23, 2010. Each of these patent applications is entitled "Graphene Windows, Method For Making Same, And Devices Containing Same." This application is also a continuation-in-part of U.S. Patent No. 13/098,101, filed April 29, 2011, which is entitled "Methods For Alignment Transfer Of Thin Membranes To Substrates." All of these above-identified patent applications are each commonly assigned to the Assignee of the present invention and are hereby incorporated herein by reference in their entirety for all purposes.

### TECHNICAL FIELD

The present invention relates to graphene windows and methods for making same. The present invention further relates to devices that include such graphene windows.

### SUMMARY OF THE INVENTION

Graphene sheets--one-atom-thick two-dimensional layers of sp²-bonded carbon-- have a range of unique electrical, thermal and mechanical properties. Just as glass windows are supported on all sides by a stronger structure (such as a wall), a "graphene window" is graphene supported on all sides by a much thicker material (typically metal). Graphene windows can be any shape, such as a round shape like a drum. The graphene of a graphene window generally is grown on its supporting metal (such as Cu).

An advantage of graphene windows is that they can be transferred to another substrate (such as the metal-oxide portion of a graphene-drum switch) without the use of liquid (which tends to tear the graphene when the liquid dries). A reason the graphene windows of the present invention are larger and cleaner than any known to be reported in the literature is because a production method has been developed that uses very pure metal foils as a starting point. In addition to graphene-drum switches, graphene windows can be used to make graphene pumps and other NEM devices.

In addition to graphene windows that are larger and cleaner, it has been found that coating at least one side of the graphene with a few nanometer thick layer of metal can lower the membrane's electrical resistance by an order of magnitude, which is advantageous when making low-loss switches out of graphene.

The present invention further includes making and transferring graphene using metal that is shaped similar to "fly swatters". These metallic structures allow the CVD growth foil to bend without rupturing the graphene windows. In addition, the graphene can be transferred to a target substrate without the use of liquids and can be precisely aligned with specific features located on the target substrate. It has been found that this approach minimizes graphene tears because the edge of a graphene window never has to come into contact with the edge of the target substrate feature.

These metallic "fly swatters" also lend themselves to pick and place machines (which are used for mass production) because a large number of swatters can be made from one sheet of metal foil, each swatter is easily detachable from the foil, and each swatter can be precisely aligned with its target substrate.

Another advantage of the present invention is that these metal-graphene assemblies also allow high current connections to be made to the delicate graphene without physically touching the graphene.

In general, in one aspect, the invention features a method that includes selecting a metal foil having a first face and a second face, wherein the metal foil is a high purity metal foil. The method further includes growing a first layer of graphene on the first face of the metal foil to form a graphene-modified foil. The second face of the graphene-modified foil is either a second layer of graphene on the second face of the metal foil (with the second layer of graphene grown during the step of growing the first layer of graphene) or the second face of the metal foil. The method further includes patterning the second face of the graphene-modified foil with a polymer. The second face of the graphene-modified foil has an exposed region. The method further includes etching the second face of the graphene-modified foil in the exposed region until exposing the first layer of graphene to form a graphene window.

Implementations of the inventions can include one or more of the following features:

The metal foil can be thermally annealed before growing the first layer of graphene.

In general, in another aspect, the invention features a method that includes selecting a metal foil having a first face and a second face. The method further includes thermally annealing the metal foil. The method further includes, after the step of annealing the metal foil, growing a first layer of graphene on the first face of the metal foil to form a graphene-modified foil. The second face of the graphene-modified foil is either a second layer of graphene on the second face of the metal foil (with the second layer of graphene grown during the step of growing the first layer of graphene) or the second face of the metal foil. The method further includes patterning the second face of the graphene-modified foil with a polymer. The second face of the graphene-modified foil has an exposed region. The method further includes etching the second face of the graphene-modified foil in the exposed region until exposing the first layer of graphene to form a graphene window.

Implementations of the above inventions can include one or more of the following features:

The step of annealing can increase the average grain size.

The metal foil can include at least two different metals.

The metal of the metal foil can be Cu.

The graphene can be grown by CVD.

The polymer can be a resolvable, photolithographically amenable polymer. The resolvable, photolithographically amenable polymer can be photoresist.

The patterning of the polymer can include a coating process. The coating process can be a spin-coating process.

The etch process can be either a dry etch process or a wet etch process.

The method can further include dissolving the polymer after etching. The method can further include rinsing off the polymer residue.

The method can further include, before the step of growing the first layer of graphene, applying a protective coating on the second face of the metal foil. The protective coating can prevent graphene from growing on the second face of the metal foil during the step of growing the first layer of graphene. The method can further include removing the protective coating from the second face of the metal foil such that the second face of the graphene-modified foil is the second face of the metal foil.

The method can further include growing the second layer of graphene on the second face of the metal foil during the step of growing the first layer of graphene. The method can further include removing the second layer of graphene on the second face before the step of patterning, such that the second face of the graphene-modified foil is the second face of the metal foil.

The metal foil can include at least 99.99% of the metal.

The metal foil can include at least 99.999% of the metal.

The method can further include positing a material on the graphene on the first face of the graphene-modified foil before the step of patterning the second face of the graphene-modified foil with a polymer. The material can be a metal. The material is a patterned material.

The step of depositing the material can include one or more of the following processes: electroplating, chemical bonding, thermal evaporation, and e-beam evaporation.

A photolithographic method can be used to define the pattern material on the second face of the graphene-modified foil.

The graphene window can be formed having a feature atop. The feature atop the graphene window can be a patterned feature.

The metal foil can have native or doped impurities. The metal foil can include at most 99.8% of the metal.

During the step of thermal annealing, the impurities can be move toward grain boundaries of the metal foil.

The graphene window formed can have adhered, concentrated impurities.

The adhered, concentrated impurities can be located at the grain boundaries.

The graphene window can have an isolated metal feature. The isolated metal features can be at approximately the center of the first face of the graphene-modified foil.

In general, in another aspect, the invention features a method that includes forming an array of supports on a material. The material comprises a material on which graphene windows can be formed. The array of supports each have a plurality of graphene windows.

Implementations of the invention can include one or more of the following features:

The material can be a semiconductor.

The material can include silicon carbide.

The material can be a metal foil and the supports can be metal foil supports.

The graphene windows can be made using one or more of the methods of the above disclosed inventions.

Each array can be located on a supported region of the material.

A support in the array of supports in a supported region of the material can be removed without damaging the graphene windows on the support and without damaging the graphene windows of the supports in neighboring supported regions.

The support from the supported region can be mated with a metal oxide chip such that the graphene windows are aligned with etched features on the metal oxide chip. The support from the supported region and the metal oxide chip have alignment marks that can be utilized for the step of mating. The support from the supported region and the metal oxide chip can be secured and wire bonded.

The support from the supported region can be mated with an insulator-conductor assembly such that the graphene windows are aligned with etched features on the insulator-conductor assembly. The support from the supported region and the insulator-conductor assembly can have alignment marks utilized for the step of mating. The method can further include electrically contacting an electrical conductor with the graphene windows of the support from the supported region. The method can further include flowing a current from the electrical conductor, through at least some of the graphene windows in the array, and to the insulator-conductor assembly.

In general, in another aspect, the invention features a method of forming a multi-layered graphene window. The method includes forming a graphene-modified foil having a first graphene window. The method further includes transferring a second graphene window and placing it on top of the first graphene window to form a multi-layered graphene window having two layers of graphene.

Implementations of the invention can include one or more of the following features:

The method can further include transferring a third graphene window and placing it on top of the second graphene window to form a multi-layered graphene window having three layers of graphene.

The method can include transferring n graphene windows n number of times to form a multi-layered graphene window having n+1 layers of graphene. The number of transferred graphene windows, n, can be at least 2.

The graphene windows can be made using one or more of the methods of the above disclosed inventions.

In general, in another aspect, the invention features a method of forming a graphene electromechanical assembly. The method includes growing graphene on a substrate to create a graphene-substrate assembly. The method further includes partially etching the substrate of the graphene-substrate assembly to create a graphene window assembly. The method further includes forming an insulator-conductor assembly with an array of etched features;. The method further includes joining the graphene window assembly with said insulator-conductor assembly.

Implementations of the invention can include one or more of the following features:

The step of joining can be done in a partial vacuum.

The step of joining can place at least one graphene window over at least one etched feature.

The graphene window assembly can be aligned with the insulator-conductor assembly using alignment marks.

The method can further include electrically contacting an electrical conductor with the graphene window assembly. The method can further include flowing a current from the electrical conductor, through the graphene window assembly, and to the insulator-conductor assembly.

In general, in another aspect, the invention features a composition made using one or more of the methods of the above disclosed inventions.

In general, in another aspect, the invention features a device that includes a composition of the above disclosed inventions.

In general, in another aspect, the invention features an assembly made using one or more of the methods of the above disclosed inventions.

### DESCRIPTION OF DRAWINGS

**FIGS. 1A-1I** depict a scheme for creating "clean" (low impurity level) and low-defect suspended graphene windows supported on metal foil.
**FIG.** 2 is a SEM image of a ∼575 µm span of free-standing, single-layer graphene supported on etched Cu foil made using the scheme depicted in **FIGS. 1A-1I****.**
**FIG. 3** is a SEM image of an array of ∼100 µm circular spans of free-standing, single-layer graphene supported on etched Cu foil made using the scheme depicted in **FIGS. 1A-1I****.**
**FIG. 4** is a SEM image of a span in clean, free-standing, single-layer graphene prepared with ultra-pure (≥99.999%) Cu foil made using the scheme depicted in **FIGS. 1A-1I****.**
**FIG. 5** is a higher magnification view of the SEM image of **FIG. 4** (view corresponding to dotted box **401)** showing removal of residual polymer by electron beam exposure around a small particle adhered to the graphene.
**FIGS. 6A-6J** depict a scheme for patterning a material (*e.g*., another metal such as Au) in a controlled fashion on the suspended graphene window on a supported metal foil. This feature is on the opposite face of the graphene as the metal support foil.
**FIGS. 7A-7H** depict a scheme for creating graphene windows supported on metal foil having native or doped impurities that concentrate at grain boundaries within the foil.
**FIGS. 8A-8C** are SEM images of nanoscale impurities remaining after completing the fabrication of free-standing, single-layer graphene spans made using the scheme depicted in **FIGS. 7A-7H****.**
**FIGS. 9A-9I** depict a scheme for creating a suspended graphene window on a metal foil support that includes an isolated metal feature on the graphene window.
**FIG. 10** is an SEM image of an isolated Cu island formed on a suspended graphene structure made using the scheme depicted in **FIGS. 9A-9I****.**
**FIGS. 11A-11B** are SEM images of an array of "individualized" mechanically isolated metal foil supports that have free-standing graphene drums (an array or individual drums) on them that were created using the same methods described in the above depicted schemes.
**FIGS. 12A-12B** depict etching the individually addressable regions of free-standing graphene spans (such as for the embodiments shown in **FIGS. 11A-11B****),** in which each region can be removed from the foil without mechanically damaging neighboring graphene features.
**FIG 12C** is a magnified view of a metal foil region in **FIG. 12****B.**
**FIGS. 13A-13E** depict a scheme for mating a graphene array made using the scheme of FIGS. **12A-12B** with a metal oxide chip.
**FIG. 14** illustrates a high current graphene switch that uses a graphene window assembly that is mated with an insulator-conductor assembly.
**FIG 15** is an SEM of a high current graphene switch.

### DETAILED DESCRIPTION

The present invention relates to graphene windows and methods for making same. The present invention further relates to devices that include such graphene windows.

### Production of Graphene

There are a number of known ways to produce graphene. For instance, graphene can be produced as follows:

Cu foil is pre-cleaned in acetic acid for 10 min, rinsed thoroughly with DI water, and then dried with a stream of N₂. The foil is then annealed in a vacuum reaction furnace to increase the average grain size. The furnace is evacuated to <150 mTorr, H₂ (25 sccm) and Ar (150 sccm) is introduced at 20 °C, and then the temperature is increased to 500 °C and maintained for 1 hour.

Following the annealing step, the Ar flow is stopped, the furnace temperature is raised to 750 °C, and then Chemical Vapor Deposition (CVD) graphene is grown by flowing in CH₄ at 140 sccm + H₂ (at 25 sccm) for 45 min, after which time the CH₄ flow is terminated.

Following graphene growth, the graphene-modified foil is cooled to 350 °C, the H₂ flow is stopped, Ar (25 sccm) is introduced, and then the furnace was held at 350 °C for 4 hour. (As used herein, "graphene-modified foil" is a metal foil that has a layer of graphene on at least one face). The graphene-modified foil is then cooled to 20 °C, the Ar flow stopped, and then the pressure is brought back to ambient with air.

For the embodiments discussed and described herein, the above method was made to produce graphene.

If desired, before growing the graphene on the metal foil, a protective layer (such as gold or chromium) can be applied to one side of the metal foil (the "backside") that would prevent the growth of graphene on that side. After the graphene is grown on the other side (the "frontside") of the metal foil, the protective layer can then be etched away from the backside using techniques known in the art. By such a method, the graphene would not need to be removed (such as by etching) from the backside of the metal foil.

### Scheme 1

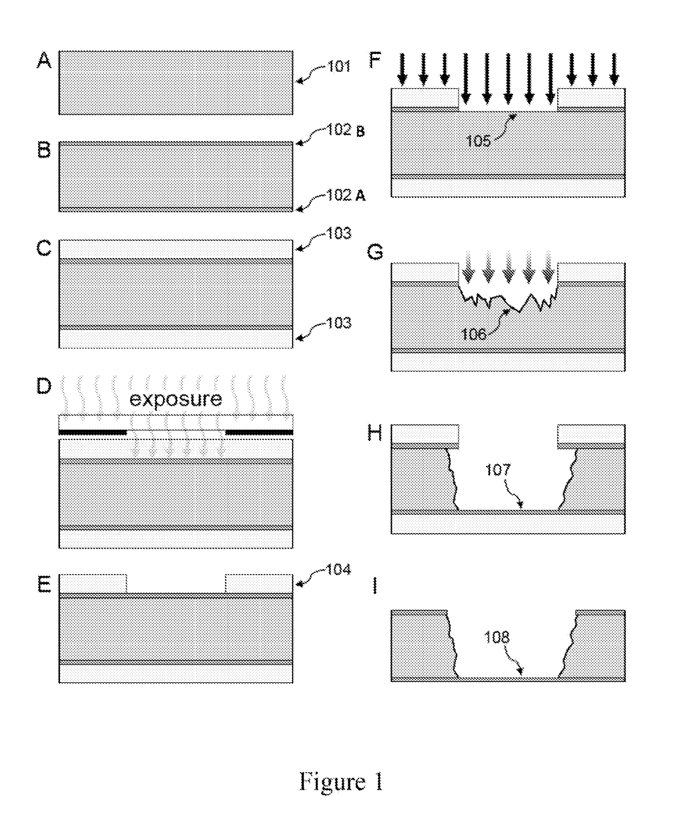

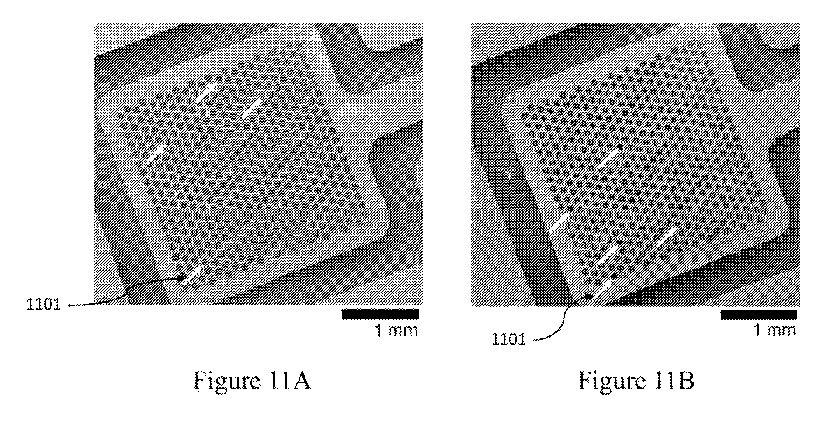

**FIGS. 1A-1I** depict a scheme (Scheme 1) for creating "clean" (low impurity level) and low-defect suspended graphene windows on a metal foil support. As shown in **FIG. 1A****,** high purity, clean metal foil **101** (e.g., Cu) is annealed to increase average grain size. As used herein, a "high purity metal foil" is a metal foil that has approximately 99.99% or more of the metal (or metals) of the metal foil. As shown in **FIG. 1B****,** graphene is grown (*e.g*., via CVD) on both foil faces (graphene **102A** and graphene **102B)** to form a graphene-modified foil. As shown in **FIG. 1C****,** a resolvable, photolithographically amenable polymer **103** (*i.e*., photoresist) is spin-coated on both sides of the graphene-modified foil. As shown in **FIGS. 1D** and **1E****,** a photolithography process is used to form a pattern **104** of the photoresist 103. As shown in **FIG. 1F****,** an etching process (dry or wet etch) is utilized to etch away graphene **102B** in exposed region **105** of the photoresist **103.** As shown in **FIGS. 1G and 1H****,** metal foil **101** is etched **106** until the opposite graphene surface **107** of the graphene **102A** is reached. As shown in **FIG. 11****,** the photoresist **103** is dissolved and the polymer residue is rinsed, which leaves behind the suspended graphene window **108.**

Using high purity Cu foils results in suspended graphene without the presence of impurities adhered to the graphene. When CVD graphene is grown on lower purity Cu foils, impurities tend to become concentrated at Cu grain boundaries during the pre-annealing and growth phases. Impurities remained adhered to the suspended graphene window following removal of the underlying Cu support. It has also been determined that the defect (e.g., holes, tears) density is significantly reduced when using ammonium persulfate as the Cu etch, as opposed to ferric chloride-based etches.

Furthermore, either single- or double-layer graphene windows can be produced if the backside graphene (shown in **FIG. 1F****)** is or is not (respectively) etched away. If not previously removed by etching, the backside graphene collapses onto the graphene on the opposite side of the foil as the metal is completely etched away beneath it; pre-etching the backside graphene away eliminates the formation of graphene double-layer windows.

Additionally, graphene mechanical and electrical properties improve (likely related to reduced defect density) as average grain size in the metal foil increases.

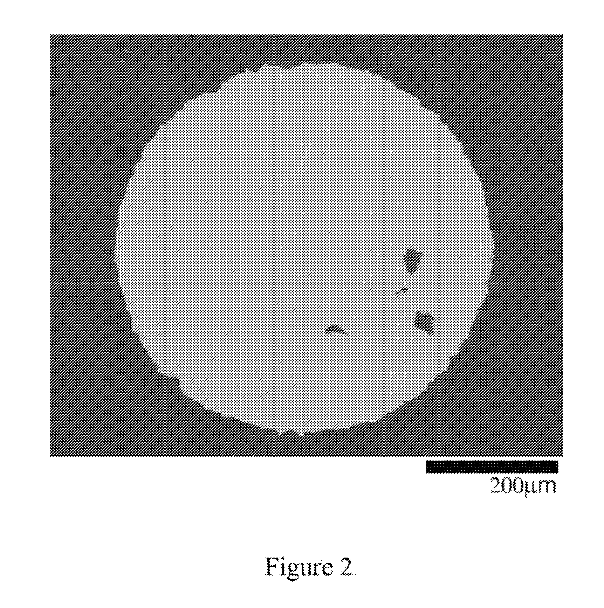

Using the scheme shown in **FIG. 1****,** free-standing circular graphene spans of up to 575 µm in diameter have been achieved. **FIG. 2** is a SEM image of a ∼575 µm span of free-standing, single-layer graphene supported on etched Cu foil.

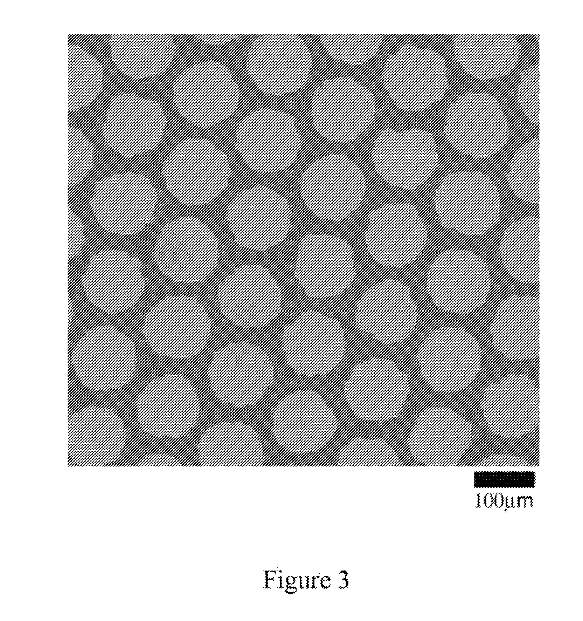

**FIG. 3** is a SEM image of an array of ∼100 µm circular spans of free-standing, single-layer graphene supported on etched Cu foil.

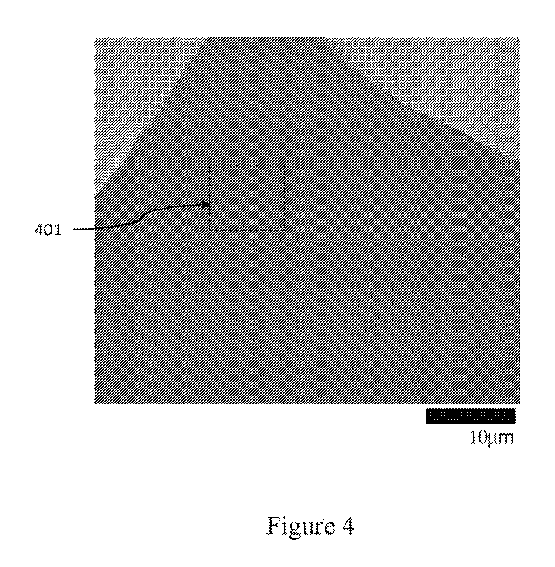

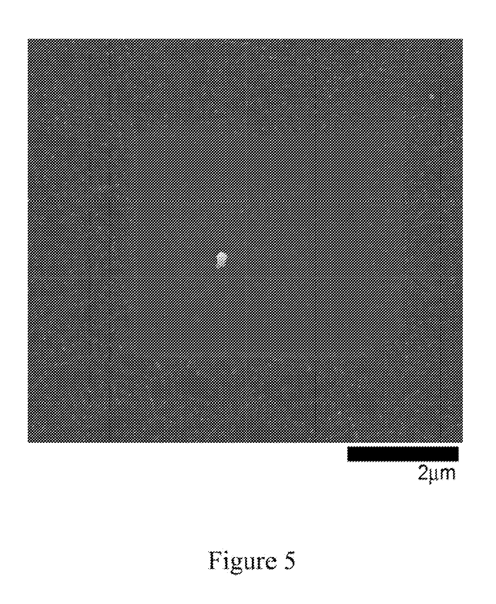

**FIG. 4** is a SEM image of a span of clean, free-standing, single-layer graphene prepared with ultra-pure (≥99.999%) Cu foil. **FIG. 5** is a higher magnification view (view corresponding to dotted box **401** in **FIG. 4****)** showing removal of residual polymer by electron beam exposure around a small particle adhered to the graphene. This one defect present was intentionally imaged to confirm the presence of graphene.

In some embodiments, during the photolithography process used to form a pattern **104** of the photoresist **103** (shown in **FIGS. 1D** and **1E****),** a photomask is used to pattern the photoresist and expose graphene **102B** within the patterned regions. The patterned photoresist and exposed graphene **102B** is then treated with O₂ plasma, thereby removing graphene **102B** from the exposed areas. A first etch solution, such as an isotropic etch solution (*e.g.*, **500** mM FeCl₃ iron(III) chloride), is used to wet etch the metal (*i.e*., copper) in the exposed, patterned regions of the metal foil **101.** The etch time is controlled and the first etching process is stopped before reaching the opposite side of the metal foil **101** and the graphene **102A.** Generally, the etched distance of this first etching process is more than half-way (*i.e*., the distance etched during the first etching process is more than the total distance etched to reach the opposite side of the metal foil **101** and the graphene **102A).** More generally, the etched distance of this first etching process is 90% of the distance to be etched to reach the opposite side of the metal foil **101** and the graphene **102A.** Optionally, the metal foil **101** can then be rinsed thoroughly with DI water to remove residual material left from the isotropic etchant.

Thereafter, a second etchant solution having a more gentle effect (*e.g*., 50 mM (NH₄)₂S₂O₈ ammonium persulfate) is used to complete the etching of the metal foil **101** (copper) until the metal is completely removed from the surface of graphene **102A** within the photoresist pattern. An etchant solution is "more gentle" than another etchant solution when it is less chemically reactive with regard to the material to be etched. Optionally, the metal foil **101** can then be rinsed thoroughly with DI water to remove residuals left from the second etchant.

To create free-standing graphene structures/membranes in the patterned regions, the metal foil **101** is carefully rinsed with one or more solvents (such as acetone followed by isopropanol) to remove both the supporting photoresist layer **103** that was covering graphene **102A** and the non-patterned photoresist **103** that was covering graphene **102B.**

The second etchant solution is preferably an anisotropic etchant solution, which is a reason why ammonium persulphate is a good etchant to use in the second etchant solution. Using ammonium persulphate also results in a more gentle etch during the second etchant step (as compared to the etch performed during the first etchant step using iron(III) chloride). Because ammonium persulphate will produce a more gentle etch (in comparison), this will generally require a higher standard of finish and possibly warming and will generally yield a slower etch rate for this latter etching step. Alternatively, the second etchant step can be isotropic, but this requires additional steps of patterning and etching to obtain the desired profile. When doing so the first etching process is performed for a majority of the way through the metal foil **101.**

### Scheme 2

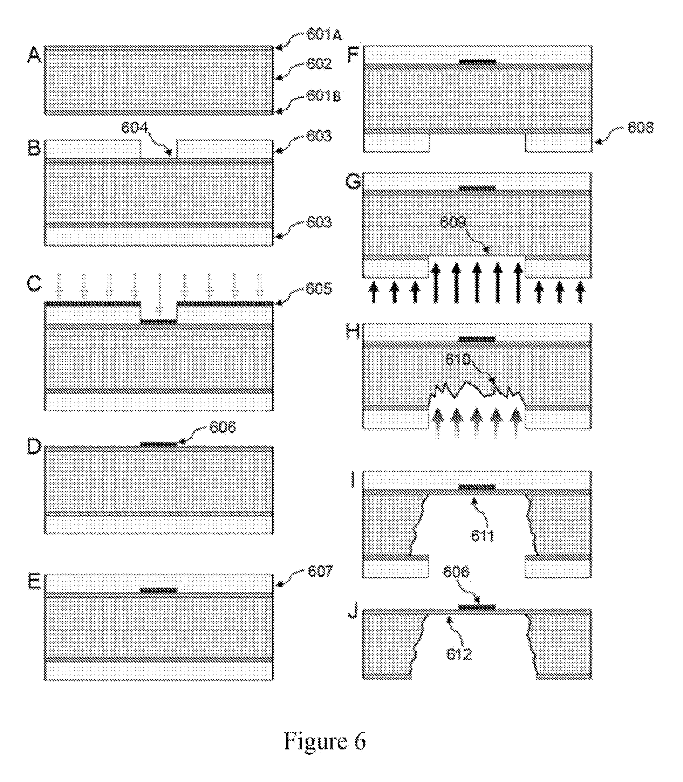

**FIGS. 6A-6J** depict a scheme (Scheme 2) for patterning a material (e.g., another metal such as Au) in a controlled fashion on the suspended graphene window on a supported metal foil. Fabrication proceeds just as in Scheme No. 1, with the additional step of patterning and depositing the material on one side of the graphene-modified foil and then doing an aligned etch of the metal away from beneath the patterned feature.

As shown in **FIG. 6A****,** graphene (graphene **601A** and graphene **601B**) is grown (*e.g*., via CVD) on both sides of clean, pre-annealed metal foil 602 (*e.g*., Cu). As shown in **FIG. 6B****,** photoresist **603** is spin-coated on both sides of the graphene-modified foil and photolithographically is used to define a deposition region **604.**

As shown in **FIG. 6C****,** material **605** (e.g., polymer, metal) is deposited onto the patterned region **604** (*e.g*., via electroplating or chemical bonding) or deposited uniformly onto the entire surface (*e.g.*, thermal or E-beam evaporation). As shown in **FIG. 6D****,** a lift-off process is performed to define the patterned feature **606.** As shown in **FIG. 6E****,** protective polymer **607** (*e.g*., photoresist) is spin-coated atop patterned feature **606.**

As shown in **FIG. 6F****,** a process is performed to align and photolithographically pattern photoresist **608** on the backside of the graphene-modified foil. As shown in **FIG. 6G****,** an etching process (dry or wet) is utilized to etch away graphene **601B** in exposed region 609 of the polymer. As shown in **FIGS. 6H and 6I****,** the metal foil 602 is etched **610** through the patterned photoresist until the opposite graphene surface **611** of the graphene **601A** is reached. As shown in **FIG. 6****J,** the photoresist is dissolved and polymer residue is rinsed, which leaves behind suspended graphene window **612** with patterned material feature **606** atop it.

### Scheme 3

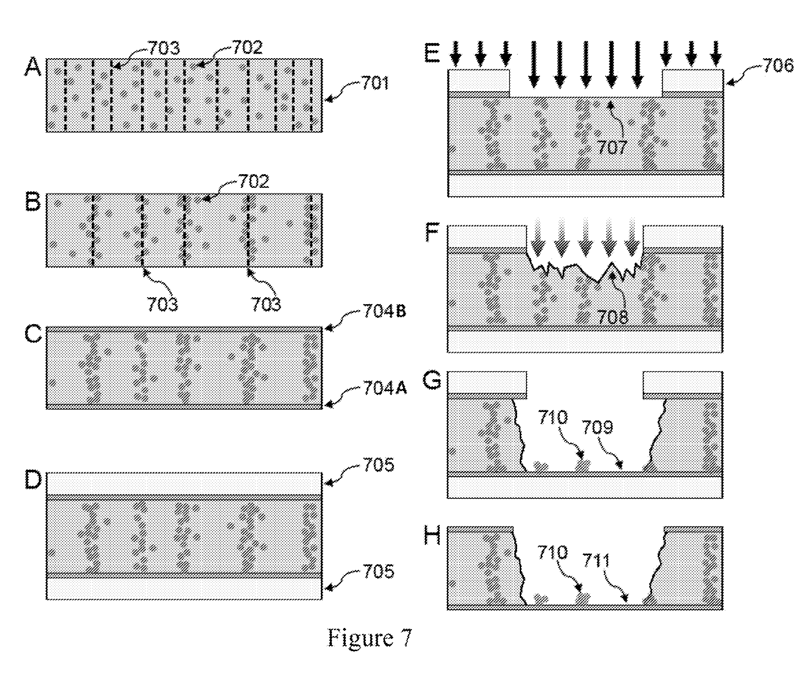

**FIGS. 7A-7H** depict a scheme (Scheme 3) for creating graphene windows supported on metal foil having native or doped impurities, either intentionally doped or native to the foil, that exploits the tendency of the impurities to migrate to grain boundaries upon heating (during pre-annealing or during graphene growth) (*i.e.,* the native or doped impurities concentrate at grain boundaries within the foil).

As shown in **FIG. 7A****,** metal foil **701** (*e.g*., Cu) with native or doped impurities **702** is utilized. Grain boundaries **703** are indicated by dashed lines. As shown in **FIG. 7B****,** during annealing, impurities **702** move toward, and concentrate at, grain boundaries **703.** As this occurs, the grain size increases (*i.e.,* grain boundary density decreases).

As shown in **FIG. 7C****,** graphene (graphene **704A** and graphene **704B**) is grown (e.g., via CVD) on both foil surfaces (which can result in additional migration and concentration of impurities). As shown in **FIG. 7D****,** photoresist **705** is spin-coated on both sides of the graphene-modified foil. As shown in **FIG. 7E****,** photolithographically is used to pattern resist **706** to allow exposed region **707** of the graphene to be etched away. As shown in **FIG. 7F****,** an etching process (wet etch) is utilized to etch away metal foil **708** through the photoresist pattern **706.** As shown in **FIG. 7G****,** the etching selectively stops at graphene-foil interface **709,** leaving behind the intact graphene at this interface supported by photoresist with adhered, concentrated impurities **710** on the graphene **704A** at the grain boundaries of the metal growth substrate. As shown in **FIG. 7H****,** the photoresist is dissolved and polymer residue is rinsed, which leaves behind suspended graphene window **711** with adhered impurities **710** patterned along grain boundaries, creating nanoscale features.

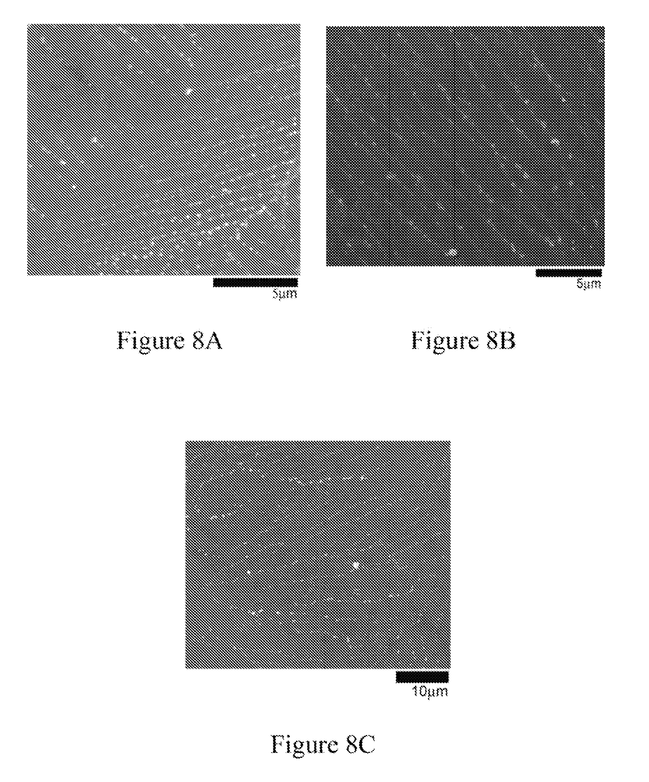

Because the foil is inherently polycrystalline, there is a fairly regular structure to the grains, which results in nanoscale bands of impurities adhered to the suspended graphene following etching and window formation. The size of the features and periodicity could be controlled by modulating the impurity concentration or grain size by varying annealing conditions (temp, time). It is believed this has potential applications in sensor technology, and it is a straightforward method for producing nanoscale features on suspended graphene structures. **FIGS. 8A-8C** are SEM images of nanoscale impurities remaining after completing the fabrication of free-standing, single-layer graphene spans made using the scheme depicted in **FIGS. 7A-7H****.** In these experiments, metal foils having ≤99.8% Cu were utilized. It was found that impurities migrated towards the grain boundaries in the metal foil at elevated temperatures.

### Scheme 4

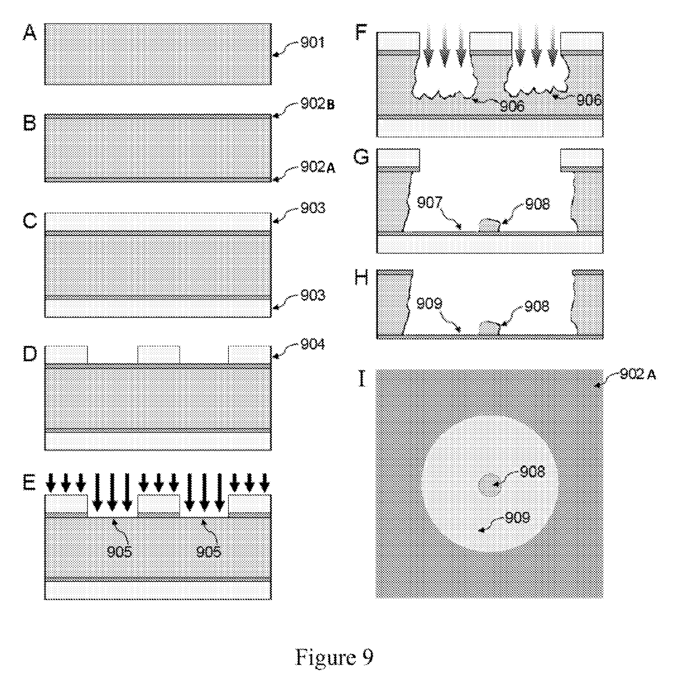

**FIGS. 9A-9I** depict a scheme (Scheme 4) for creating a suspended graphene window on a metal foil (e.g., Cu) support that includes an isolated metal feature on the graphene window, i.e., in the center of the suspended graphene window the substrate is patterned, such as in an annular fashion.

As shown in **FIG. 9A****,** high purity, clean metal foil **901** (*e.g*., Cu) is annealed to increase average grain size. As shown in **FIG. 9B****,** graphene (graphene **902A** and graphene 902B) is grown (*e.g.*, via CVD) on both faces of foil **901.** As shown in **FIG. 9C****,** resolvable, photolithographically amenable polymer **903** (*i.e*., photoresist) is spin-coated on both sides of graphene-modified foil. As shown in **FIG. 9D****,** photolithography is used to pattern photoresist **904.** As shown in **FIG. 9E****,** an etching process (dry or wet) is utilized to etch away graphene in exposed regions **905** of the photoresist. As shown in **FIG. 9F****,** the metal foil is etched **906** through photoresist. As shown in **FIG. 9G****,** the etching process etches the metal foil down until opposite graphene surface **907** is reached, leaving behind an isolated Cu feature **908** adhered to the graphene **902A,** as the graphene with photoresist island is under-etched away. As shown in **FIG. 9H****,** the photoresist is dissolved and polymer residue is rinsed, leaving behind the suspended graphene window **909** with adherent Cu feature **908.** **FIG. 9I** is a top view of an isolated Cu feature **908** adhered to the graphene window **909** in the center of CVD grown graphene **902A** on the Cu foil support.

By adjusting the center feature size relative to the foil thickness and etch time, the lateral and vertical dimensions of the isolated feature can be tuned. An isolated feature with an identical height as the foil thickness could be created by proper choice of dimension and abbreviated etch time (so as to prevent undercutting and release during etching).

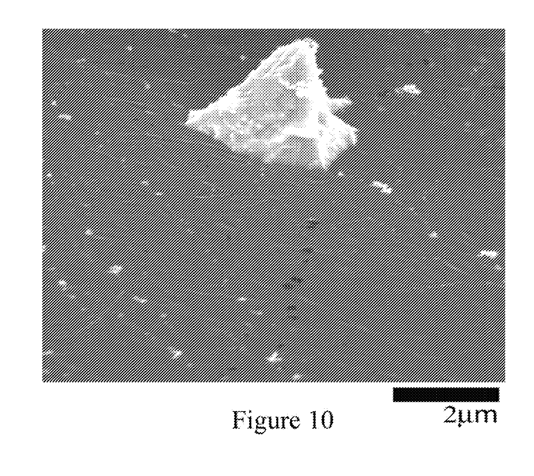

**FIG. 10** **is** an SEM image of an isolated Cu island formed on a suspended graphene structure made using the scheme depicted in **FIGS. 9A-9I****.** In this embodiment, the graphene was grown on lower-purity foil, so remaining impurities were seen adhered to the graphene.

### Scheme 5

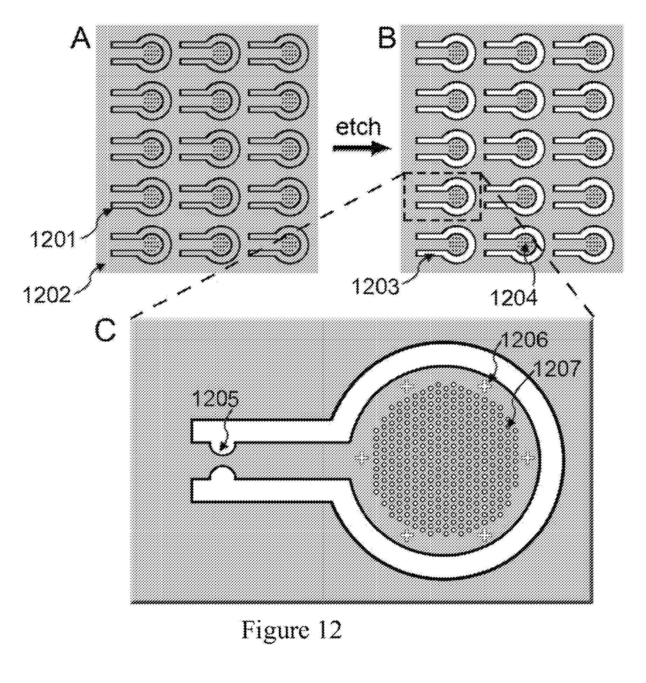

This embodiment utilizes a scheme (Scheme 5) for creating an array of "individualized" metal foil supports that have free-standing graphene windows (an array or individual windows) on them, created using the same protocols described in Schemes 1-4, above. **FIGS. 11A-11B** are SEM images of such an array of individualized mechanically-isolated metal foil supports. Sparse defects (tears, indicted with white arrows **1101**) in the graphene can be seen in each image. By etching individually addressable regions of free-standing graphene windows, each region could be removed from the foil (as shown in **FIGS. 12A-12B****)** without mechanically damaging neighboring graphene features (processes like cutting can damage graphene structures).

As shown in **FIG 12A****,** photoresist features **1201** are patterned onto a graphene-modified metal foil **1202** (using the same or similar protocols described in abovementioned Schemes 1-4). As shown in **FIG. 12B****,** by etching through the exposed metal foil regions **1203,** individualized arrays of free-standing graphene **1204 and 1207** can be produced. Additionally, other features can be etched into each metal support structure to, for example, (i) aid in removal of each region from the array using perforations or narrowed sections **1205** or (ii) alignment of the region to a chip structure using alignment marks **1206.**

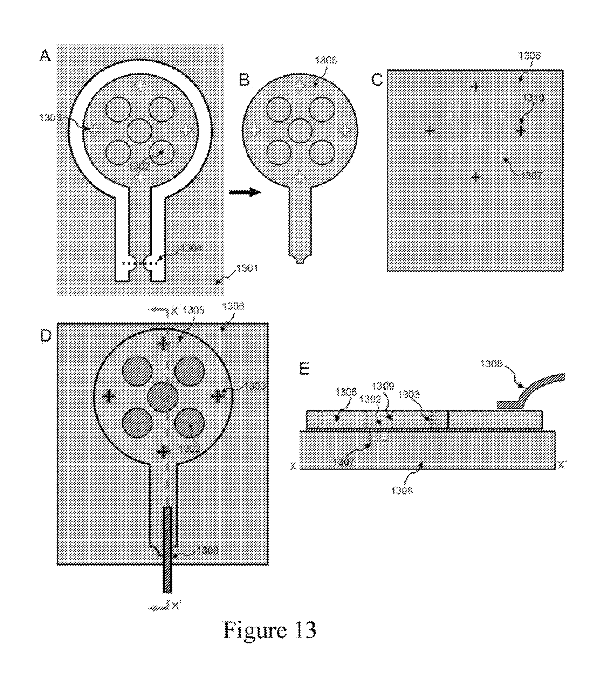

As shown in **FIGS. 13A****,** metal foil **1301** has isolated and individualized Cu support containing an array of free-standing graphene features **1302** with etched alignment marks **1303.** As shown in **FIG. 13B****,** the individual Cu support **1305** is partitioned from the main sheet of foil (at **1304** of **FIG 13A**). As shown in **FIGS. 13C-13D****,** metal oxide chip **1306** features **1307** that spatially correspond to graphene features 1302 (shown on **FIG. 13A**) on the foil array can be mated to the graphene array using alignment marks **(1303** on **FIG. 13C****)** on the metal oxide chip. As shown in **FIG. 13E****,** the individual Cu support 1305 can be secured and wire bonded **1308.**

Thus, alignment marks **(1206** and **1303)** can be etched into each Cu support to facilitate "pick-and-place" manufacturing (*i.e*., each array can be aligned and placed onto a supporting chip structure with alignment marks **(1310** in **FIG. 13C****)** so that the graphene features overlap specific regions of the chip that then integrate the graphene into the chip's functionality). Moreover, the metal support (*e.g.*, Cu) provides a convenient route to "wire up" **(1308** in **FIG. 13E****)** the graphene and provide high current-carrying capacity to, or away from, the graphene structures. Additionally, this type of approach is useful for manufacturing arrays of graphene-based transmission electron microscopy (TEM) grids that are primarily used in research for sample analysis.

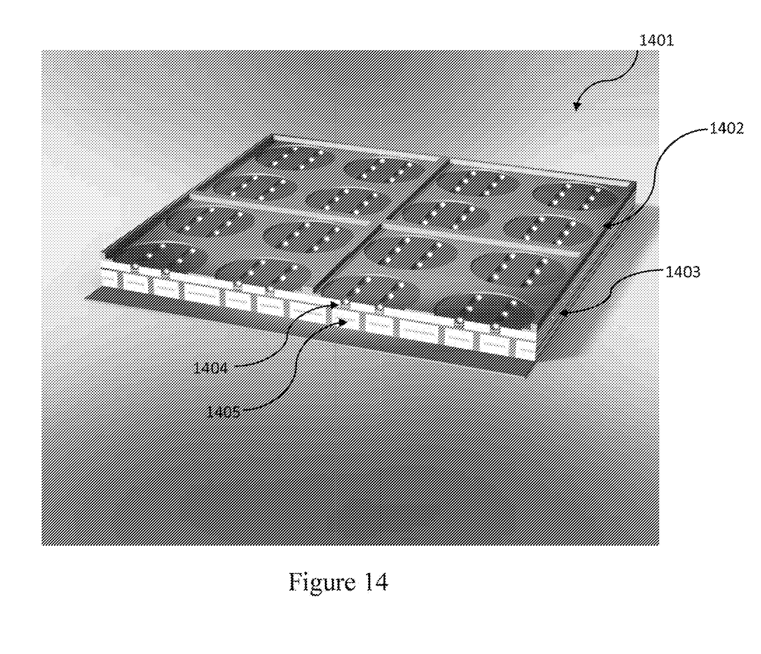

**FIG. 14** illustrates a high current graphene switch **1401** that uses a graphene window assembly **1402** that is mated with an insulator-conductor assembly **1403.** **FIG. 14** shows the alignment of the graphene windows **1404** with a group of etched features **1405** in the insulator-conductor assembly **1403.**

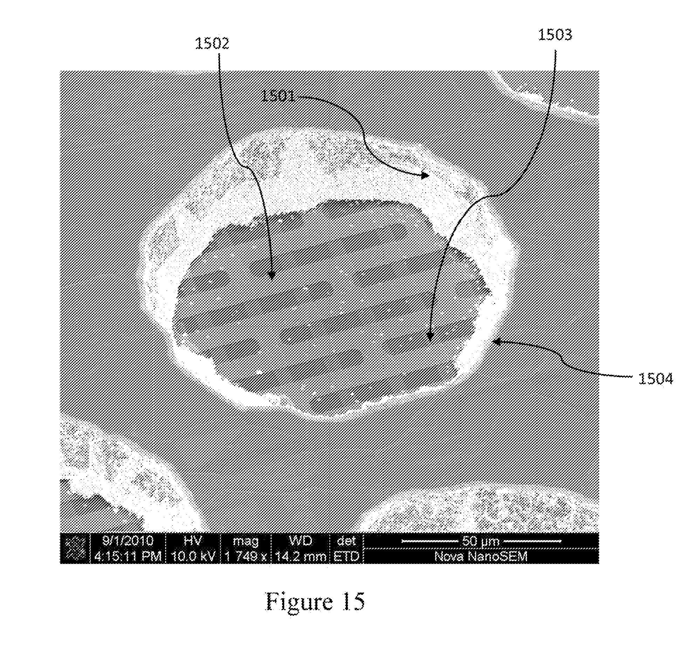

**FIG. 15** is an SEM of a high current graphene switch. **FIG. 15** shows the etched copper foil **1501** and the graphene **1502** in contact with etched features in the insulator-conductor assembly **1503.** **FIG. 15** shows the graphene wrinkles and tears at the edge of the graphene window **1504** when these windows overlap with the etched features in the insulator-conductor assembly **1503.** This is a reason why it is beneficial to align these two assemblies before bringing them together *(i.e.,* to avoid such wrinkling/tearing).

A number of embodiments of the invention have been described. Nevertheless, it will be understood that various modifications may be made without departing from the spirit and scope of the invention. Accordingly, other embodiments are within the scope of the following claims.

While embodiments of the invention have been shown and described, modifications thereof can be made by one skilled in the art without departing from the spirit and teachings of the invention. The embodiments described and the examples provided herein are exemplary only, and are not intended to be limiting. Many variations and modifications of the invention disclosed herein are possible and are within the scope of the invention. Accordingly, other embodiments are within the scope of the following claims. The scope of protection is not limited by the description set out above, but is only limited by the claims which follow, that scope including all equivalents of the subject matter of the claims.

The disclosures of all patents, patent applications, and publications cited herein are hereby incorporated herein by reference in their entirety, to the extent that they provide exemplary, procedural, or other details supplementary to those set forth herein.

The present application and invention further includes the subject matter of the following numbered clauses:
1. A method comprising:
   a. selecting a metal foil having a first face and a second face;
   b. forming a graphene-modified foil comprising the step of growing a first layer of graphene on the first face of the metal foil, wherein
      i. the graphene-modified foil has a first face and a second face, and
      ii the first layer of graphene is at the first face of the graphene-modified foil;
   c. patterning the second face of the graphene-modified foil with a polymer, wherein the second face of the graphene-modified foil has an exposed region;
   d. etching the second face of the graphene-modified foil in the exposed region until exposing the first layer of graphene, wherein a graphene window is formed and wherein the step of etching comprises
      i. a first etching process of etching the metal foil a first distance with a first etchant solution, wherein the first distance is less than the distance needed to etch the metal foil to expose the first layer of graphene, and
      ii. a second etching process of etching the metal foil a second distance with a second etchant solution thereby exposing the first layer of graphene, wherein the first etchant solution and the second etchant solution are different.
2. The method of clause 1, wherein the first distance is greater than the second distance.
3. The method of cl. 1 or 2 wherein the first distance is at least 90% of the combined distance of the first distance and the second distance.
4. The method of cl. 1, 2 or 3 wherein the first etchant solution is an isotropic etchant solution.
5. The method of any preceding clause (a.p.c.) wherein the first etchant solution comprises iron(III) chloride.
6. The method of a.p.c. wherein the first etchant solution is an iron(III) chloride solution having a concentration of at least 500 mM iron(III) chloride in the iron(III) chloride solution.
7. The method of a.p.c. wherein the second etchant solution is an anisotropic etchant solution.
8. The method of a.p.c. wherein the second etchant solution comprises ammonium persulfate.
9. The method ofa.p.c. wherein the first etchant solution comprises iron(III) chloride.
10. The method of a.p.c. wherein the second etchant solution is an ammonium persulfate solution having a concentration of at least 50 mM ammonium persulfate in the ammonium persulfate solution.
11. The method of a.p.c. wherein the second etchant solution is an isotropic etchant solution and the second etching process is a more gentle etching process as as compared to the first etching process.
12. The method of a.p.c. wherein the step of etching further comprises rinsing the metal foil with DI water between the first etching process and the second etching process.
13. The method of a.p.c. wherein the step of etching further comprises rinsing the metal foil with DI water after the second etching process.
14. The method of a.p.c. wherein the metal of the metal foil is Cu.
15. The method of a.p.c. wherein the step of forming the graphene-modified foil further comprises the step of growing a second layer of graphene on the second face of the metal foil.
16. A method comprising:
   a. selecting a metal foil having a first face and a second face;
   b. forming a graphene-modified foil comprising the step of growing a first layer of graphene on the first face of the metal foil, wherein
      i. the graphene-modified foil has a first face and a second face, and
      ii the first layer of graphene is at the first face of the graphene-modified foil;
   c. patterning the second face of the graphene-modified foil with a polymer, wherein the second face of the graphene-modified foil has an exposed region;
   d. etching the second face of the graphene-modified foil in the exposed region until exposing the first layer of graphene, wherein a graphene window is formed, and wherein the step of etching comprises
      i. a first etching process of etching the metal foil a first distance with an isotropic etchant solution, wherein the first etching process is stopped before exposing the first layer of graphene, and
      ii. a second etching process of etching the metal foil a second distance with a second etchant solution to expose the first layer of graphene, wherein
         (A) the second etchant solution is different from the isotropic etchant solution and
         (B) the second etchant process is a more gentle etching process as compared to the first etching process.
17. The method of clause 16, wherein the second etchant solution is an anistropic etchant solution.
18. The method of clause 16 or 17, wherein
   i. the isotropic etchant solution comprises iron(III) chloride,
   ii. the anisotropic etchant solution comprises ammonium persulfate; and
   iii. the first distance is greater than the second distance.
19. The method of clause 16, 17 or 18, wherein
   i. the isotropic etchant solution is an iron(III) chloride solution having a concentration of at least 500 mM iron(III) chloride in the solution,
   ii. the anisotropic etchant solution is an ammonium persulfate solution having a concentration of at least 50 mM ammonium persulfate in the solution, and
   iii. the first distance is at least 90% of the combined distance of the first distance and the second distance.
20. The method of clause 16, 17, 18 or 19, wherein the step of forming the graphene-modified foil further comprises the step of growing a second layer of graphene on the second face of the metal foil.

## Claims

1. A method comprising:
a. selecting a metal foil having a first face and a second face;
b. forming a graphene-modified foil comprising the step of growing a first layer of graphene on the first face of the metal foil, wherein
i. the graphene-modified foil has a first face and a second face, and
ii the first layer of graphene is at the first face of the graphene-modified foil;
c. patterning the second face of the graphene-modified foil with a polymer, wherein the second face of the graphene-modified foil has an exposed region;
d. etching the second face of the graphene-modified foil in the exposed region until exposing the first layer of graphene, wherein a graphene window is formed and wherein the step of etching comprises
i. a first etching process of etching the metal foil a first distance with a first etchant solution, wherein the first distance is less than the distance needed to etch the metal foil to expose the first layer of graphene, and
ii. a second etching process of etching the metal foil a second distance with a second etchant solution thereby exposing the first layer of graphene, wherein the first etchant solution and the second etchant solution are different.

2. The method of claim 1, wherein the first distance is greater than the second distance.

3. The method of claim 1 or claim 2, wherein the first distance is at least 90% of the combined distance of the first distance and the second distance.

4. The method of any preceding claim, wherein the first etchant solution is an isotropic etchant solution.

5. The method of any preceding claim, wherein the first etchant solution comprises iron(III) chloride, and, optionally, the first etchant solution is an iron(III) chloride solution having a concentration of at least 500 mM iron(III) chloride in the iron(III) chloride solution.

6. The method of any preceding claim, wherein the second etchant solution is an anisotropic etchant solution.

7. The method of any preceding claim, wherein the second etchant solution comprises ammonium persulfate, and, optionally, the second etchant solution is an ammonium persulfate of at least 50 mM ammonium persulfate in the ammonium persulfate solution.

8. The method of any preceding claim, wherein the second etchant solution is an isotropic etchant solution and the second etching process is a more gentle etching process as compared to the first etching process.

9. The method of any preceding claim, wherein the step of etching further comprises rinsing the metal foil with DI water between the first etching process and the second etching process.

10. The method of any preceding claim, wherein the step of etching further comprises rinsing the metal foil with DI water after the second etching process.

11. The method of any preceding claim, wherein the metal of the metal foil is Cu.

12. The method of any preceding claim, wherein
a. the first etchant solution is an isotropic etchant solution,
b. the first etching process is stopped before exposing the first layer of graphene, and
c. the second etchant process is a more gentle etching process as compared to the first etching process.

13. The method of claim 12, wherein the second etchant solution is an anistropic etchant solution.

14. The method of claim 12 or claim 13, wherein
i. the isotropic etchant solution comprises iron(III) chloride, and, optionally, the isotropic etchant solution is an iron(III) chloride solution having a concentration of at least 500 mM iron(III) chloride in the solution,
ii. the anisotropic etchant solution comprises ammonium persulfate, and, optionally, the anisotropic etchant solution is an ammonium persulfate solution having a concentration of at least 50 mM ammonium persulfate in the solution; and
iii. the first distance is greater than the second distance, and, optionally, the first distance is at least 90% of the combined distance of the first distance and the second distance.

15. The method of any preceding claim, wherein the step of forming the graphene-modified foil further comprises the step of growing a second layer of graphene on the second face of the metal foil.
